# EUROPEAN PATENT APPLICATION

(11) **EP 4 597 078 A1**
(43) Date of publication of application: **06.08.2025**
(21) Application number: 23871388.7
(22) Date of filing: 18.07.2023
(51) Int. Cl.: G01N 21/75, G01N 35/00

(54) **AUTOMATED ANALYZING DEVICE, AND LIGHT SOURCE STABILIZATION METHOD FOR AUTOMATED ANALYZING DEVICE**

(30) Priority: 30.09.2022 JP 2022157536
(71) Applicant: HITACHI HIGH-TECH CORPORATION, Tokyo 105-6409 (JP)
(72) Inventor: FUKAYA, Masashi, Tokyo 105-6409 (JP); TAKAHASHI, Takuya, Tokyo 105-6409 (JP); HORIKAWA, Hiroshi, Tokyo 105-6409 (JP); FUKUMURA, Mami, Tokyo 100-8280 (JP)
(74) Representative: Strehl & Partner mbB
(86) International application number: PCT/JP2023/026282
(87) International publication number: WO 2024/070144

(57) **Abstract**

Provided is an automatic analyzer capable of avoiding light intensity drift accompanying a change in temperature caused by starting supply of power to a light source and capable of shortening a stabilization waiting time. The automatic analyzer 50 includes a light source 39 that irradiates a reaction container 2 containing a mixed liquid of a sample and a reagent with light for measuring the sample, a temperature regulating mechanism 27 that regulates a temperature of the light source 39 using a temperature regulating medium, a reaction tank 5 in which a temperature of the reaction container 2 is regulated using the temperature regulating medium, circulating pumps 30 and 35 that deliver the temperature regulating medium, an analyzing unit 42 that analyzes the sample, and an operation control unit 43. When transitioning from a non-measurement state of the sample to a measurable state via a measurement preparation state, the operation control unit 43 raises a current or a voltage applied to the light source 39 in the measurement preparation state, raises a flow rate of the temperature regulating medium for a certain period of time, restores the flow rate of the temperature regulating medium to a flow rate before raising, then makes transition to a measurable state, and executes measurement of the sample.

## Description

### Technical Field

The present invention relates to an automatic analyzer that measures a concentration or an activity value of a target component in a sample containing multiple components such as blood or urine. In particular, the disclosure relates to an automatic analyzer including an optical unit having a function of mixing a sample and a reagent and measuring a light absorbance of a reaction liquid using a light source, and a light source stabilization method for the automatic analyzer.

### Background Art

An automatic analyzer is a device that analyzes biological samples such as blood, urine, and cerebrospinal fluid. The automatic analyzer uses an aliquoting mechanism including nozzles for samples and reagents to aliquot the sample and the reagent from each of storage containers into a reaction container, stirs a mixed liquid of the sample and the reagent, and then measures a change in color of a reaction liquid by using an optical mechanism. The automatic analyzer has a function of quantifying a target substance in the sample from measured data and outputting a result thereof.

The optical mechanism for measuring a change in color is configured with a light source unit that emits light to be transmitted through a reaction liquid, and a photometer unit that receives the transmitted light. The light source unit uses a halogen lamp, an LED, or the like. The photometer unit is configured with a diffraction grating for splitting the transmitted light into light of each wavelength and a light receiving unit for receiving the light of each wavelength after diffraction. In the light receiving unit, detectors such as photodiodes are arranged at specified intervals to detect light of specific wavelength.

Generally, to stabilize a light intensity, the light source regulates an ambient temperature. Some automatic analyzers are configured such that a medium (liquid or gas) for regulating the temperature of the reaction container is shared with a temperature regulating medium of the light source.

PTL 1 describes a mechanism that regulates a temperature of a light source using a temperature regulating medium (liquid or gas) in an automatic analyzer.

When the light source starts to be turned on by supplying power, the light source itself generates heat and causes a change in temperature. Therefore, light intensity is unstable for a certain period of time after the light source is turned on. Thus, when measurement is started as it is, measurement accuracy is adversely affected.

Therefore, in current devices, it is necessary to wait a certain period of time after turning on the light source before starting measurement. Meanwhile, the light source of such an automatic analyzer is required to have long lifetime. Thus, for example, techniques for reducing unnecessary consumption by a function of turning off a light source when measurement is not performed are provided.

### Citation List

### Patent Literature

PTL 1: JP2009-264908A

### Summary of Invention

### Technical Problem

As described above, even when a technique for reducing unnecessary consumption by a function of turning off a light source when measurement is not performed is adopted, it is necessary to ensure the above-mentioned waiting time. Thus, when a non-measurement state and a measurement state are frequently switched, processing capability is significantly reduced. In particular, in such an automatic analyzer, a timing of setting a sample in the device becomes irregular depending on operation. Accordingly, the non-measurement state and the measurement state are frequently switched.

In such an automatic analyzer, a long lifetime of the light source is important in terms of maintenance frequency and running costs. In general, a halogen lamp is used in such an automatic analyzer, but in recent years, an LED light source tends to be adopted in terms of long lifetime.

There is a technique of turning off a light source when measurement is not performed to reduce a time in which the light source is unnecessarily turned on, thereby lowering replacement frequency while also achieving long lifetime of the light source itself.

However, in the light source, especially LED, the light intensity is sensitive to a temperature environment and fluctuates. To reduce such fluctuations, it is necessary to keep a temperature around the light source constant using a temperature regulating medium. Therefore, there is a technology in which a temperature regulating medium (for example, water) and a medium that regulates a temperature of a reaction container share light source temperature regulation.

However, even when the temperature of the light source is regulated to be constant, when the light source itself is switched from OFF to ON, heat generated by the light source itself causes a change in temperature of the LED light source. Therefore, light intensity drift tends to occur immediately after the LED light source is turned on.

When the light source is turned OFF when measurement is not performed, to avoid effects of the light intensity drift, the automatic analyzer cannot start measurement without waiting for a certain light intensity stabilization time (for example, 30 minutes) after turning on the light source. The waiting time is a great hindrance when it is desired to quickly output measurement results, such as a case of treating an emergency specimen.

An object of the invention is to provide an automatic analyzer including a light source unit that regulates a temperature at a constant temperature, and an automatic analyzer and a light source stabilization method for the automatic analyzer capable of avoiding light intensity drift accompanying a change in temperature caused by starting supply of power to a light source and capable of shortening a stabilization waiting time.

### Solution to Problem

The present invention is configured as follows to achieve the above-mentioned object.

There is provided an automatic analyzer including: a light source that irradiates a reaction container containing a mixed liquid of a sample and a reagent with light for measuring the sample; a temperature regulating mechanism that regulates a temperature of the light source using a temperature regulating medium; a reaction tank in which a temperature of the reaction container is regulated using the temperature regulating medium; a circulating pump that delivers the temperature regulating medium; an analyzing unit that analyzes the sample; and an operation control unit. When transitioning from a non-measurement state of the sample to a measurable state via a measurement preparation state, the operation control unit raises a current or a voltage applied to the light source in the measurement preparation state, raises a flow rate of the temperature regulating medium for a certain period of time, restores the flow rate of the temperature regulating medium to a flow rate before raising, then makes transition to a measurable state, and executes measurement of the sample.

There is provided a light source stabilization method for an automatic analyzer including a light source that irradiates a reaction container containing a mixed liquid of a sample and a reagent with light for measuring the sample, a temperature regulating mechanism that regulates a temperature of the light source using a temperature regulating medium, a reaction tank in which a temperature of the reaction container is regulated using the temperature regulating medium, an analyzing unit that analyzes the sample, and an operation control unit, in which the method includes: when transitioning from a non-measurement state of the sample to a measurable state via a measurement preparation state, raising a current or a voltage applied to the light source in the measurement preparation state, raising a flow rate of the temperature regulating medium for a certain period of time, restoring the flow rate of the temperature regulating medium to a flow rate before raising, then making transition to a measurable state, and executing measurement of the sample.

### Advantageous Effects of Invention

According to the invention, it is possible to provide an automatic analyzer including a light source unit that regulates a temperature at a constant temperature, and an automatic analyzer and a light source stabilization method for the automatic analyzer capable of avoiding light intensity drift accompanying a change in temperature caused by starting supply of power to a light source and capable of shortening a stabilization waiting time.

### Brief Description of Drawings

[Fig. 1] Fig. 1 is a schematic diagram of an automatic analyzer.
[Fig. 2] Fig. 2 is a schematic diagram of an upper surface of the automatic analyzer.
[Fig. 3] Fig. 3 is a schematic diagram of a light source unit.
[Fig. 4] Fig. 4 is a schematic diagram of a circulation flow channel configuration of a temperature regulating medium.
[Fig. 5] Fig. 5 is a diagram illustrating an example of control of device state transition and light intensity fluctuation when examples of the invention are not applied.
[Fig. 6] Fig. 6 is a diagram illustrating a circulation flow channel according to Example 1.
[Fig. 7] Fig. 7 is a diagram illustrating control accompanying state transition from a non- measurement state to a measurable state using the circulation flow channel configuration according to Example 1.
[Fig. 8] Fig. 8 is a diagram illustrating a circulation flow channel according to Example 2.
[Fig. 9] Fig. 9 is a diagram illustrating an example of control for shortening a light intensity stabilization time using the flow channel of Fig. 8.
[Fig. 10] Fig. 10 is a diagram illustrating another example of control for shortening the light intensity stabilization time using the flow channel of Fig. 8.
[Fig. 11] Fig. 11 is a diagram illustrating a circulation flow channel 38 according to Example 3.
[Fig. 12] Fig. 12 is a diagram illustrating an example of control for shortening the light intensity stabilization time using a first light source temperature regulating medium flow channel and a second light source temperature regulating medium flow channel of Fig. 11.
[Fig. 13] Fig. 13 is a schematic diagram of a circulation flow channel configuration of a temperature regulating medium in a modification example of Example 2.

### Description of Embodiments

Hereinafter, embodiments of the invention will be described with reference to the drawings.

### Examples

### (Example 1)

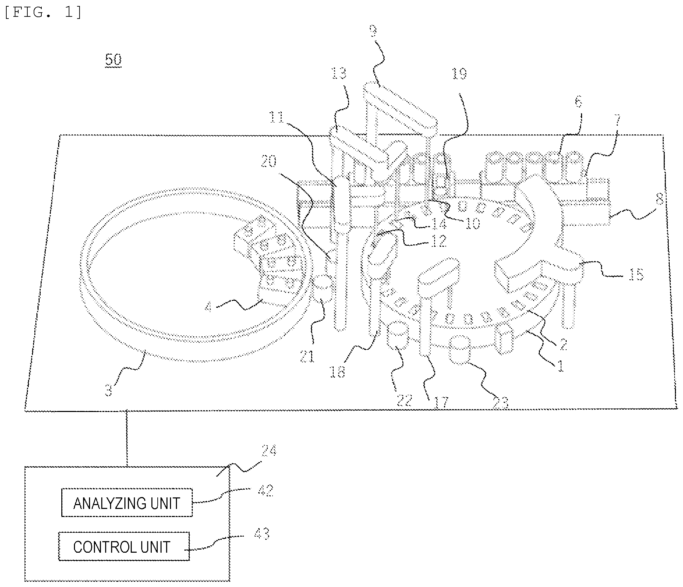

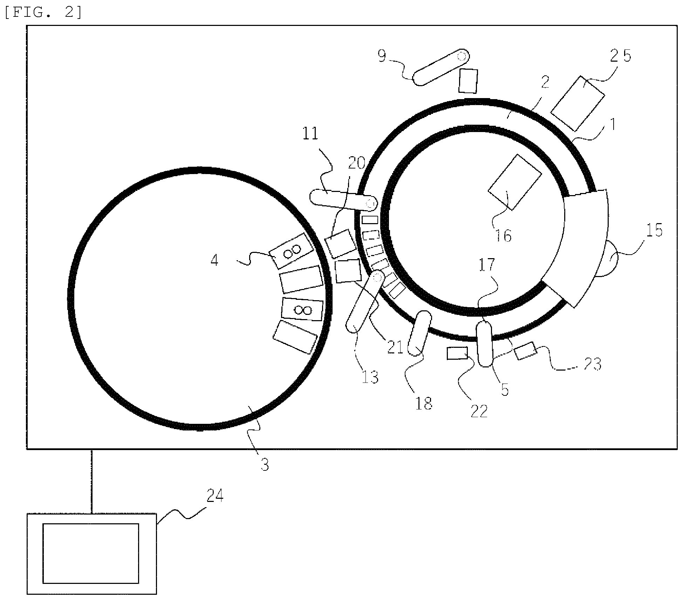

First, an overview of an automatic analyzer 50 according to Example 1 will be described with reference to Figs. 1 and 2.

Figs. 1 and 2 are diagrams illustrating an overall configuration of the automatic analyzer 50. Fig. 1 shows an overview of mechanisms of the automatic analyzer 50. Fig. 2 shows an overview of the automatic analyzer 50 as viewed from an upper surface.

In Figs. 1 and 2, reaction containers 2 that contain a mixed liquid of a sample and a reagent are arranged in a circular shape on a reaction disk 1. A plurality of reagent containers 4 can be arranged in a circular shape on a reagent disk (or a reagent storage) 3. The reaction containers 2 are soaked in a reaction tank 5 filled with a thermally conductive medium, such as water, of which a temperature is controlled at 37 degrees. Thus, by circulating constant temperature water in the reaction tank 5, temperatures of the reaction containers 2 are kept constant at 37 degrees.

A sample transport mechanism 8 that moves a rack 7 carrying sample containers 6 is provided near the reaction disk 1. A sample aliquoting mechanism 9 capable of rotation and up-down movement is provided between the reaction disk 2 and the sample transport mechanism 8. The sample aliquoting mechanism 9 includes a sample nozzle 10. Reagent aliquoting mechanisms 11 and 13 capable of rotation and up-down movement are provided between the reaction disk 1 and the reagent disk 3. The reagent aliquoting mechanism 11 includes a reagent nozzle 12, and the reagent aliquoting mechanism 13 includes a reagent nozzle 14.

A cleaning mechanism 15, a spectrophotometer 16, and stirring mechanisms 17 and 18 are arranged around the reaction disk 1. A sample nozzle washing tank 19, reagent nozzle washing tanks 20 and 21, and stirring mechanism washing tanks 22 and 23 are each provided within an operating range of each of the sample aliquoting mechanism 9, the reagent aliquoting mechanisms 11 and 13, and the stirring mechanisms 17 and 18. An operation control unit 43 of a control computer 24 controls each mechanism. The control computer 24 also includes an analyzing unit 42 that analyzes the sample.

A light source unit 25 for making transmitted light incident into the spectrophotometer 16 is disposed to be symmetric to the spectrophotometer 16 with the reaction tank 5 interposed therebetween. A halogen lamp is generally used for the light source unit 25. However, in recent years, a technique using LEDs tends to be used in terms of long lifetime.

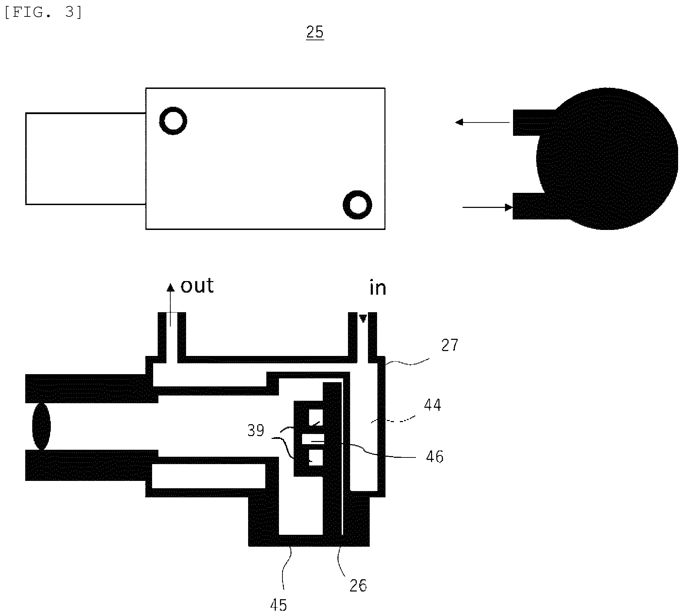

The light source unit 25 is configured with a light emitting unit 26 and a temperature regulation holder (temperature regulating mechanism) 27. Fig. 3 shows a schematic diagram of the light source unit 25. Fig. 3 shows an upper surface, a right side surface, and a schematic cross section of the light source unit 25.

In Fig. 3, the light emitting unit 26 is configured such that a light emitting diode (LED element) as a light source 39 that irradiates the reaction container 2 with light for measuring the sample is disposed on a base part 45. The light emitting unit 26 is also provided with a temperature sensor 46 that measures a temperature of the light source 39. Example 1 shows a configuration in which light beams of two LED elements having different wavelengths are combined using a mirror. However, the light emitting principle of the light source 39 and conditions such as various configurations and arrangements are not limited.

The light source unit 25 is configured such that the light emitting unit 26 is inserted into an internal space of the temperature regulation holder 27. A temperature regulating medium flow channel 44 is provided outside the internal space of the temperature regulation holder 27. A temperature regulating medium (liquid or gas) flows through the flow channel, thereby achieving a function of regulating the temperature of the space inside the temperature regulation holder 27. The temperature regulating medium flows from the flow channel connected to "in" in Fig. 3 from the outside of the temperature regulation holder 27 into the temperature regulation holder 27, and then is discharged from a flow channel of "out". The temperature regulating medium circulates in the automatic analyzer 50 such that the temperature regulating medium and the reaction tank 5 for regulating the temperature of the reaction container 2 shares the light source unit 25.

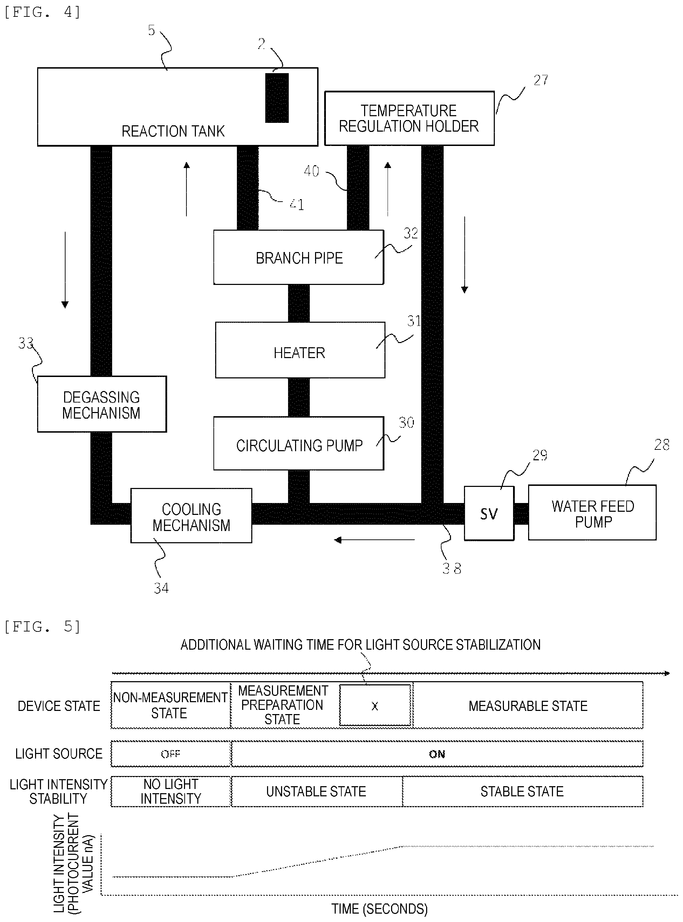

Fig. 4 is an example different from the invention, and is a schematic diagram of a circulation flow channel configuration of a temperature regulating medium. Fig. 4 shows an example in which water is fed, but other media may be used in a similar configuration.

In Fig. 4, water is fed from a water feed pump 28 to a circulation flow channel 38 via a solenoid valve SV29. The fed water is fed by a circulating pump 30 and heated by passing through a heater 31. Thereafter, a temperature regulating medium is fed to the reaction tank 5 via a branch pipe 32 and a reaction tank temperature regulating medium flow channel 41. A temperature regulating medium is also fed to the temperature regulation holder 27 via the branch pipe 32 and a light source temperature regulating medium flow channel 40. Then, the temperature regulating media pass through each of the units and returns to the circulating pump 30 via a return flow channel.

A degassing mechanism 33 and a cooling mechanism 34 are disposed in the flow channel on the side returning to the circulating pump 30 of the reaction tank 5. The cooling mechanism 34 may also serve as a cooling mechanism for a reagent cooler which is not shown in Fig. 4. A circulation flow rate, a temperature of the heater 31, and an output of the cooling mechanism 34 are controlled such that the temperature in the reaction tank 5 is kept constant, for example, at 37°C by circulating water through the circulation flow channel 38. A diameter and a length of the flow channel that connects each of the mechanisms are set under appropriate conditions in which an overall configuration of the automatic analyzer 50 and temperature regulation efficiency of the heater 31 and the cooling mechanism 34 are additionally considered.

Fig. 5 shows device state transitions of a non-measurement state of the sample, a measurement preparation state of the sample, and a measurable state of the sample, current on and off behaviors of the light source 39 during transition, and a stability state of a light intensity of the light source 39 accompanying such behavior, when embodiments of the invention are not applied.

As shown in Fig. 5, when the non-measurement state of the sample transitions to the measurement preparation state, a power of the light source 39 is turned on. Thereafter, the automatic analyzer 50 performs operations required for measurement preparation in the measurement preparation state. Here, the light intensity of the light source 39 is in an unstable state due to the effect of temperature environment change caused by starting supply of power to the light source 39. The light intensity is indicated by a photocurrent value nA based on a current value detected by a photodiode in the spectrophotometer 16.

When the light source 39 transitions to the measurable state while maintaining the unstable state, the transition adversely affects the measured value. Therefore, it is necessary to provide an additional light source stabilization waiting time of X seconds even after the measurement preparation operations end.

Therefore, it is necessary to provide an extra time in the measurement preparation time for the additional light source stabilization waiting time, and a time until transition to the measurable state increases. For example, when LED is employed as the light source 39, a temperature effect caused by the phenomenon is particularly noticeable, and a transition time to the stable state increases. Therefore, it is necessary to provide an additional waiting time of 15 minutes for the measurement preparation operations that usually end in 5 minutes.

The invention provides a system that significantly reduces the above-mentioned additional waiting time or does not generate the additional waiting time at all.

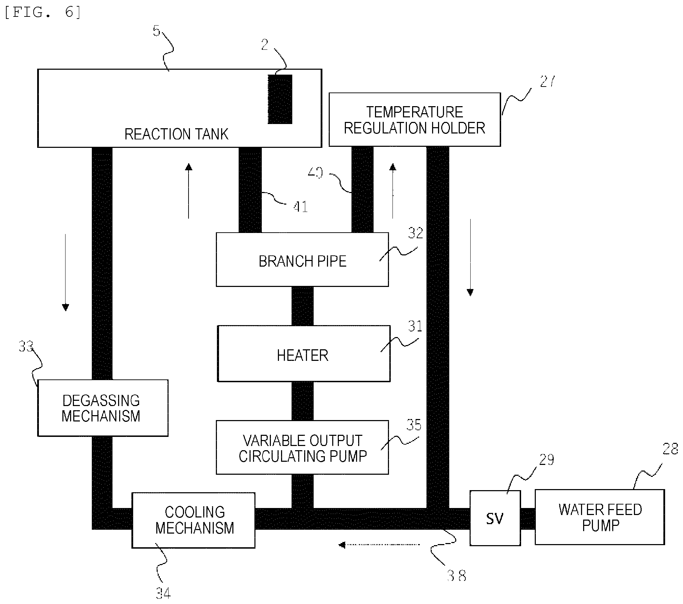

Fig. 6 is a diagram illustrating the circulation flow channel 38 according to Example 1 of the invention. In the circulation flow channel 38 of Fig. 6, a circulating pump is disposed as a variable output circulating pump 35. The variable output circulating pump 35 is able to change a flow rate by controlling a current and a voltage.

The operation control unit 43 of the control computer 24 controls the current and the voltage of the variable output circulating pump 35.

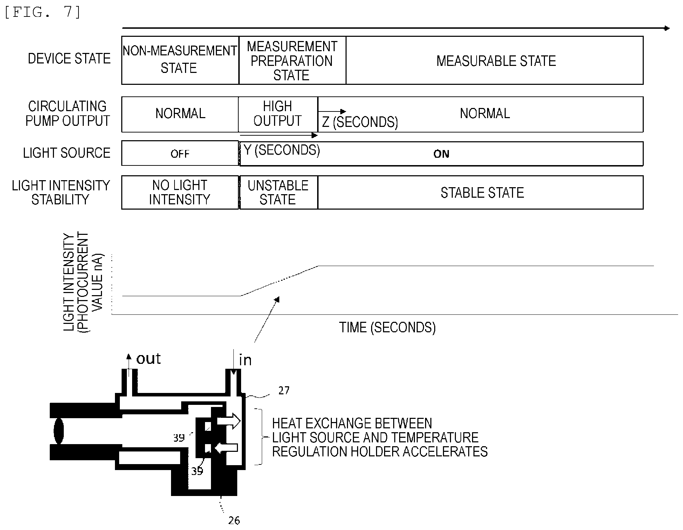

Fig. 7 shows control accompanying state transition from the non-measurement state to the measurable state using the circulation flow channel configuration according to Example 1 shown in Fig. 6.

Fig. 7 shows the device state transition of the non-measurement state, the measurement preparation state, and the measurable state, the current on and off behaviors of the light source 39 during transition, and the stability state of the light intensity of the light source 39 accompanying such behavior.

In Fig. 7, the power of the light source 39 is turned on to make transition from the non-measurement state to the measurable state. Here, the output of the variable output circulating pump 35 is made higher than a normal output while performing the operations required for the measurable state. Thereby, it is possible to circulate water in the circulation flow channel 38 faster than a normal state. For example, a normal state where water is delivered at 2.5 L/min is changed to a state where water is delivered at 5.0 L/min.

Accordingly, heat exchange with the light source unit 25 in the temperature regulation holder 27 is accelerated, thereby shortening a light intensity unstable time. The high output state is maintained for Y seconds. Y seconds are set as a time sufficient to change the unstable state of the light source to the stable state.

Y seconds may be determined by directly monitoring light intensity drift, confirming that the light source is transitioned to the stable state, and ending the high output state using the transition as a trigger. Specifically, when the light intensity drift is monitored, the amount of change of light intensity of the light source 39 per unit second (for example, 60 seconds) or light absorbance per unit time of the specimen detected by the spectrophotometer 16 is acquired. A threshold value is set for the amount of change in light intensity or the amount of change in light absorbance (amount of drift). Then, in the measurement preparation state and in the high output state of the variable output circulating pump 35, whether the amount of change is within the threshold value of the amount of change in light intensity or the threshold value of the amount of change in light absorbance is checked. When the amount of change is not within the threshold value, the high output state is continued. When the amount of change is within the threshold value of the amount of change in light intensity or the threshold value of the amount of change in light absorbance, the flow rate of the temperature regulating medium is restored to a flow rate before increase, and the high output state ends.

Temperature monitoring of the light source 39 may be used as a trigger to determine Y seconds. When temperature monitoring is used as a trigger, the device is configured such that the temperature sensor 46 that is a measuring device capable of measuring the temperature of the light source 39 of the light source unit 25 is provided and the temperature of the light source 39 of the light source unit 25 inside the temperature regulation holder 27 can be monitored.

In the measurement preparation state, after the variable output circulating pump 35 enters the high output state, the high output state continues until the temperature of the light source 39 of the light source unit 25 reaches a specified temperature threshold value. When the specified temperature threshold value is reached, using the situation as a trigger, the flow rate of the temperature regulating medium is restored to the flow rate before increase, and the high output state ends. Thereafter, the measurement preparation state is maintained for Z seconds, and can be transitioned to the measurable state.

When the measurement is performed while the variable output circulating pump 35 is in the high output state, there is a risk that circulating water in the reaction tank 5 fluctuates to contain air bubbles, such that light absorbance fluctuates. Therefore, in the measurement preparation state, after the variable output circulating pump 35 returns from the high output state to the normal state, the automatic analyzer 50 waits for a circulating flow rate to stabilize for Z seconds, and then enters the measurable state. Z seconds is a time required to stabilize the circulating water volume, and varies depending on the total circulating water volume and the flow channel configuration in the automatic analyzer 50. Thus, the time is set depending on the configuration of the automatic analyzer 50.

In Example 1 of the invention, even when the times of Y and Z seconds are added, it is possible to make a time shorter than a time in the measurement preparation state in the example different from the invention shown in Fig. 5.

As described above, in Example 1 of the invention, when transitioning from the non-measurement state of the sample to the measurable state via the measurement preparation state, the operation control unit 43 raises a current or a voltage applied to the light source 39 in the measurement preparation state, raises the flow rate of the temperature regulating medium for a certain period of time, restores the temperature regulating medium flow rate, then after waiting for a certain period of time of Z seconds to elapse, makes transition to the measurable state and executes measurement of the sample.

Thus, according to Example 1 of the invention, it is possible to provide an automatic analyzer including a light source unit that regulates a temperature at a constant temperature, and an automatic analyzer and a light source stabilization method for the automatic analyzer capable of avoiding light intensity drift accompanying a change in temperature caused by starting supply of power to a light source and capable of shortening a stabilization waiting time.

As an example of the change in amount of delivered liquid of the variable output circulating pump 35, the amount of delivered liquid is changed from 2.5 L/min in the normal state to 5.0 L/min. However, the amount of delivered liquid can be appropriately changed according to the device to which the variable output circulating pump 35 is applied. Considering a heat exchange efficiency of the LED light source 39, for example, the flow rate may be set in a range of initial flow rate × 1.4 to initial flow rate × 4.0. An upper limit of the amount of the delivered liquid can be set to total circulating water volume × 2.5 regardless of the initial flow rate.

### (Example 2)

Next, Example 2 of the invention will be described.

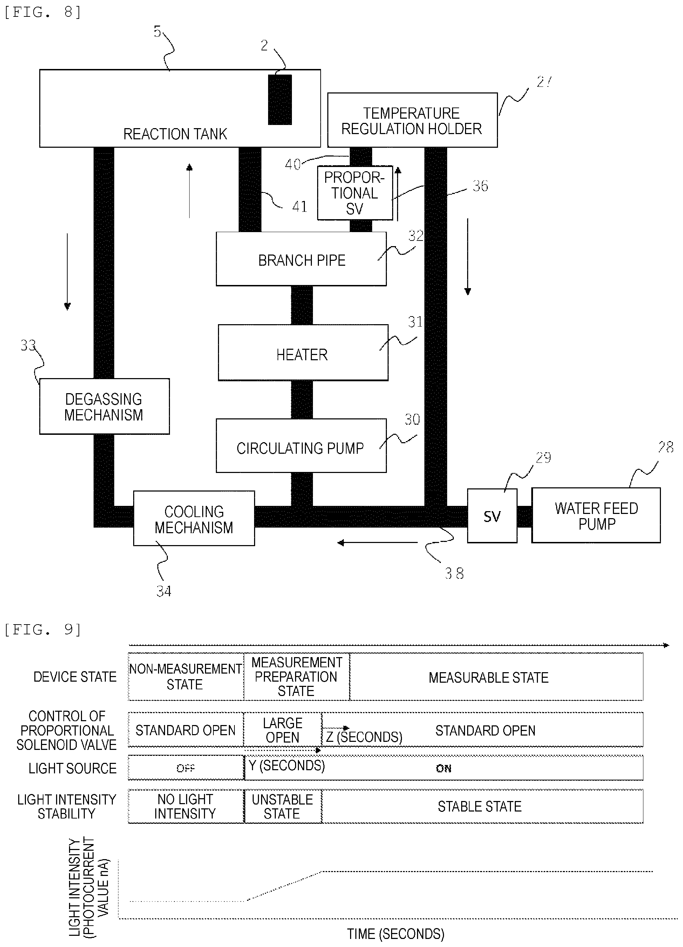

Fig. 8 is a diagram illustrating the circulation flow channel 38 according to Example 2 of the invention. The configuration of the automatic analyzer 50 in Example 2 is the same as that shown in Figs. 1 and 2. Therefore, the drawings and the detailed descriptions will not be repeated.

Example 2 shows an example of the circulation flow channel 38 when the circulating pump 30 shown in Fig. 4 is used instead of the variable output circulating pump 35 as in Example 1. In Example 2, a proportional solenoid valve 36 is provided in the light source temperature regulating medium flow channel 40 between the branch pipe 32 and the temperature regulation holder 27. The proportional solenoid valve 36 is a mechanism capable of setting an amount of opening of the solenoid valve to be variable by control of a current or a voltage. The operation control unit 43 of the computer 24 controls the amount of opening of the proportional solenoid valve 36.

To avoid the flow rate being changed insignificantly due to pressure loss when changing the amount of opening of the proportional solenoid valve 36, it is desirable that a resistance of a flow channel via which liquid returns from the temperature regulation units (the heater 31, the temperature regulation holder 27, and the cooling mechanism 34) to the circulating pump 30 is smaller than a resistance of a flow channel via which the liquid is sent from the circulating pump 30 to the temperature regulation unit.

Fig. 9 is a diagram illustrating an example of control for shortening the light intensity stabilization time using the flow channel of Fig. 8. In Fig. 9, the power of the light source 39 is turned on to make transition from the non-measurement state to the measurable state. Here, while performing the operations required for the measurable state, the amount of opening of the proportional solenoid valve 36 is changed to a large open state in which the amount of opening is larger than a standard open state. For example, in such a configuration, the difference between the standard opening and the large opening is 1.5 times.

As the resistance of the flow channel is relatively smaller on the temperature regulation holder 27 side than on the reaction tank 5 side, the flow rate on the temperature regulation holder 27 side is larger. After Y seconds elapse in the measurement preparation state, the proportional solenoid valve 36 is returned to the standard open state and maintained for Z seconds, and then the state can be transitioned to the measurable state. As a result, as in Example 1 shown in Fig. 6, heat exchange between the temperature regulation holder 27 and the light emission unit 26 is accelerated, and the light intensity unstable state is shortened.

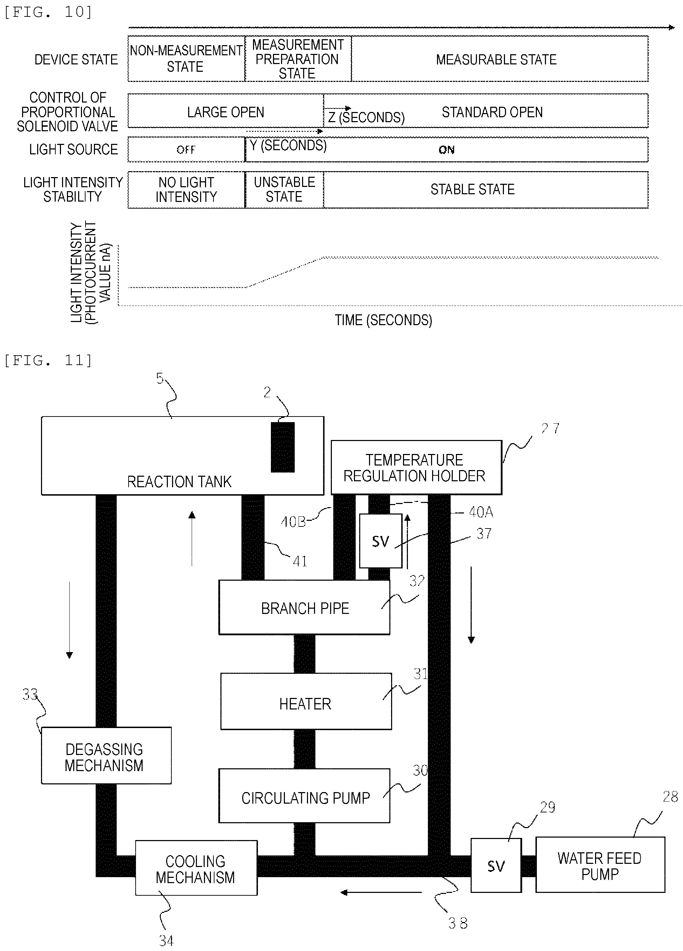

As shown in Fig. 10, the proportional solenoid valve 36 may be controlled to be in the large open state in the non-measurement state, and then to be in the standard open state after Y seconds elapsed from the transition to the measurement preparation state.

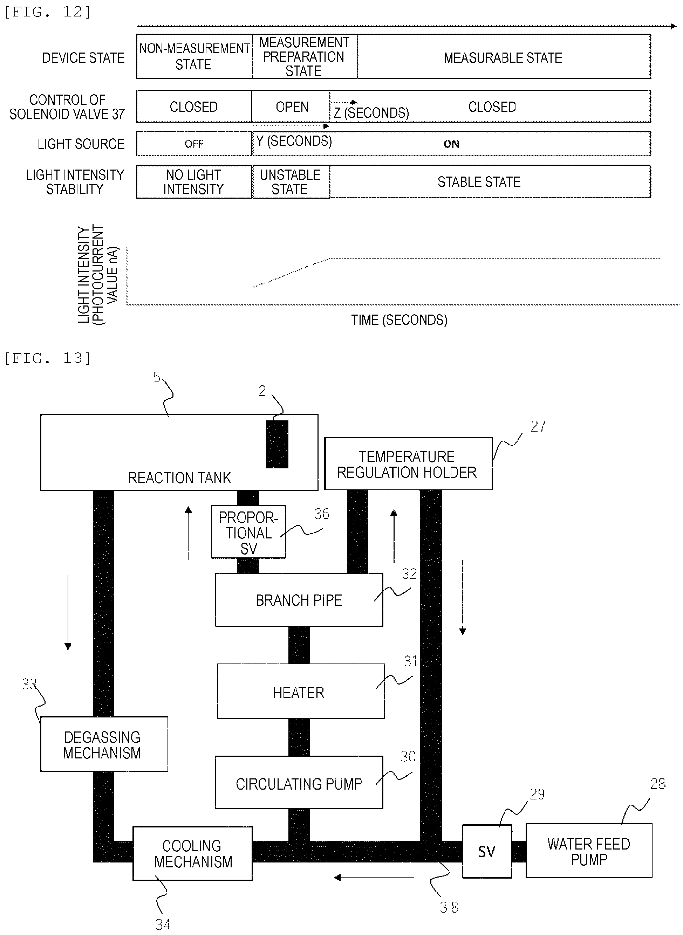

In Fig. 8, the proportional solenoid valve 36 is disposed in the light source temperature regulating medium flow channel 40 on the temperature regulation holder 27 side. However, as shown in Fig. 13, the proportional solenoid valve 36 may be disposed in the reaction container temperature regulating medium flow channel 41 on the reaction tank 5 side. Here, in the measurement preparation state, it is necessary to perform control for raising the flow rate on the temperature regulation holder 27 side by further closing the proportional solenoid valve 36 than in the measurement state to narrow the flow channel and raising the resistance of the flow channel relatively more than the temperature regulation holder 27 side.

In Example 2, it is possible to obtain the same effect as in Example 1.

Note that an example in which Example 1 and Example 2 are combined, such as an example in which the proportional solenoid valve 36 is disposed on the temperature regulation holder 27 side or the reaction tank 5 side and the variable output circulating pump 35 is disposed instead of the circulating pump 30, is also an example of the invention.

### (Example 3)

Next, Example 3 of the invention will be described.

Fig. 11 is a diagram illustrating the circulation flow channel 38 according to Example 3 of the invention. The configuration of the automatic analyzer 50 in Example 3 is the same as that shown in Figs. 1 and 2. Therefore, the drawings and the detailed descriptions will not be repeated.

Example 3 shows a flow channel configuration that does not use a proportional solenoid valve and has the same effect as that in Example 1. In Example 3, the light source temperature regulating medium flow channel 40 that is connected to the temperature regulation holder 27 via the branch pipe 32 is configured to include two flow channels (a first light source temperature regulating medium flow channel 40A and a second light source temperature regulating medium flow channel 40B). A solenoid valve 37 is disposed in the first light source temperature regulating medium flow channel 40A. The operation control unit 43 of the computer 24 controls the solenoid valve 37.

Fig. 12 is a diagram illustrating an example of control for shortening the light intensity stabilization time using the first light source temperature regulating medium flow channel 40A and the second light source temperature regulating medium flow channel 40B in Fig. 11.

In Fig. 12, to transition from the non-measurement state to the measurable state, the power of the light source 39 is turned on in the measurement preparation state. Here, the solenoid valve 37 is opened while performing the operations required for the measurable state. As a result, the flow rate in the temperature regulation holder 27 is relatively raised than the flow rate in the reaction tank 5 side, such that the flow rate in the temperature regulation holder 27 is increased.

After Y seconds elapse in the measurement preparation state, the open state of the solenoid valve 37 is returned to the closed state and maintained for Z seconds, and then the state can transition to the measurable state. Thereby, as in Example 1 shown in Fig. 6, heat exchange between the temperature regulation holder 27 and the light source unit 25 is accelerated, and the light intensity unstable time is shortened.

In Example 3 as well, it is possible to obtain the same effect as in Example 1.

As described above, in a device in which the light source 39 is turned off in the non-measurement state to achieve the long lifetime, and in a system in which heat generated when the light source 39 is switched from off to on causes the light intensity to be unstable for a long time, the invention has an effect of accelerating heat exchange between the light source unit 25 and the temperature regulation holder 27 in the measurement preparation state.

Accordingly, as it is possible to shorten the unstable time of the light source 39, the time required for the measurement preparation state can be limited to minimum mechanism preparation operations.

Thereby, it is possible to shorten the time required to transition from the non-measurement state to the measurable state via the measurement preparation state. There may be urgent measurement requests issued to the automatic analyzer such as a specimen required to be treated immediately being sent. Therefore, it is greatly advantageous for a user to shorten the time from the non-measurable state until when the measurement can be started as much as possible.

In Examples 1 to 3 mentioned above, the measurable state also includes blank measurement of the reaction container before actually measuring the light absorbance of the mixed liquid.

According to the invention, when transitioning from the non-measurement state to the measurement preparation state and then to the measurable state, control is performed to switch a current value applied to the light source 39 in each state. In the non-measurement state, by applying a current value of zero or a current value lower than that in the measurable state, it is possible to extend a replacement cycle of the light source 39 mounted on the automatic analyzer 50.

In the above-mentioned automatic analyzer 50, a current applied to the light source 39 is changed when the device transitions from the non-measurement state to the measurement preparation state. In the example different from the invention, the amount of heat generated by the light source 39 changes, and thus the light intensity changes. Therefore, an extra waiting time is required to wait for light intensity stabilization in the measurement preparation state. In the invention, the device has a function of temporarily raising the flow rate of the temperature regulating medium of the light source in the measurement preparation state compared to the measurement state to deal with a phenomenon in which the light intensity increases and decreases over time. Thereby, the heat exchange between the light source 39 and the temperature regulating medium is accelerated.

According to the invention, it is possible to reduce the light intensity stabilization time of the light source 39 compared to a general transition from the non-measurement state to the measurement state. The increased flow rate is restored to the normal flow rate before transitioning to the measurement state.

To deal with the light intensity drift caused by heat generation due to switching the current value of the light source 39 from the non-measurement state in the measurement preparation state, the flow rate of the temperature regulating medium is raised in the measurement preparation state to accelerate the heat exchange between the light source 39 and the temperature regulating medium. Thereby, it is possible to reduce the temperature drift of the light source per unit time. As a result, it is possible to suppress the light intensity drift caused by the temperature drift within a specified range. Therefore, according to the invention, it is possible to shorten the light intensity stabilization time, and when starting measurement from the non-measurement state, it is not necessary to further extend a processing time of the measurement preparation state, and it is possible to enter the measurement state with minimum preparation operations.

### Reference Signs List

1: reaction disk
2: reaction container
3: reagent disk
**4:** reagent container
5: reaction tank
6: sample container
7: rack
8: sample transport mechanism
**9:** sample aliquoting mechanism
10: sample nozzle
11, 13: reagent aliquoting mechanism
12, 14: reagent nozzle
15: cleaning mechanism
16: spectrophotometer
17, 18: stirring mechanism
19: sample nozzle cleaning tank
20, 21: reagent nozzle cleaning tank
22, 23: stirring mechanism cleaning tank
24: control computer
25: light source unit
26: light emission unit
27: temperature regulation holder (temperature regulating mechanism)
**28:** water feed pump
**29:** solenoid valve
**30:** circulating pump
**31:** heater
32: branch pipe
33: degassing mechanism
**34:** cooling mechanism
35: variable output circulating pump
**36:** proportional solenoid valve
37: solenoid valve
38: circulation flow channel
39: light source
40: light source temperature regulating medium flow channel
40A: first light source temperature regulating medium flow channel
40B: second light source temperature regulating medium flow channel
41: reaction tank temperature regulating medium flow channel
42: analyzing unit
43: operation control unit
44: temperature regulating medium flow channel
**45:** base
46: temperature sensor
50: automatic analyzer

## Claims

1. An automatic analyzer comprising:
a light source that irradiates a reaction container containing a mixed liquid of a sample and a reagent with light for measuring the sample;
a temperature regulating mechanism that regulates a temperature of the light source using a temperature regulating medium;
a reaction tank in which a temperature of the reaction container is regulated using the temperature regulating medium;
a circulating pump that delivers the temperature regulating medium;
an analyzing unit that analyzes the sample; and
an operation control unit, wherein
when transitioning from a non-measurement state of the sample to a measurable state via a measurement preparation state,
the operation control unit raises a current or a voltage applied to the light source in the measurement preparation state, raises a flow rate of the temperature regulating medium for a certain period of time, restores the flow rate of the temperature regulating medium to a flow rate before raising, then makes transition to a measurable state, and executes measurement of the sample.

2. The automatic analyzer according to claim 1, wherein
the circulating pump is a variable output circulating pump, and the operation control unit raises the flow rate of the temperature regulating medium for a certain period of time in the measurement preparation state by changing a flow rate of the variable output circulating pump, restores the flow rate of the temperature regulating medium, and then makes transition to the measurable state.

3. The automatic analyzer according to claim 1, further comprising:
a light source temperature regulating medium flow channel through which the temperature regulating medium is delivered to the temperature regulating mechanism; and
a reaction tank temperature regulating medium flow channel through which the temperature regulating medium is delivered to the reaction tank, wherein
a proportional solenoid valve is disposed in the light source temperature regulating medium flow channel, and the operation control unit raises the flow rate of the temperature regulating medium delivered to the temperature regulating mechanism for a certain period of time in the measurement preparation state by controlling an amount of opening of the proportional solenoid valve, restores the flow rate of the temperature regulating medium, and then makes transition to the measurable state.

4. The automatic analyzer according to claim 1, further comprising:
a light source temperature regulating medium flow channel through which the temperature regulating medium is delivered to the temperature regulating mechanism; and
a reaction tank temperature regulating medium flow channel through which the temperature regulating medium is delivered to the reaction tank, wherein
a proportional solenoid valve is disposed in the reaction tank temperature regulating medium flow channel, and the operation control unit raises the flow rate of the temperature regulating medium delivered to the temperature regulating mechanism for a certain period of time in the measurement preparation state by controlling an amount of opening of the proportional solenoid valve, restores the flow rate of the temperature regulating medium, and then makes transition to the measurable state.

5. The automatic analyzer according to claim 1, further comprising:
a first light source temperature regulating medium flow channel and a second light source temperature regulating medium flow channel through which the temperature regulating medium is delivered to the temperature regulating mechanism; and
a reaction tank temperature regulating medium flow channel through which the temperature regulating medium is delivered to the reaction tank, wherein
a solenoid valve is disposed in the first light source temperature regulating medium flow channel, and the operation control unit raises the flow rate of the temperature regulating medium delivered to the temperature regulating mechanism for a certain period of time in the measurement preparation state by controlling opening and closing of the solenoid valve, restores the flow rate of the temperature regulating medium, and then makes transition to the measurable state.

6. The automatic analyzer according to claim 1, wherein
the operation control unit raises the flow rate of the temperature regulating medium for a certain period of time, restores the flow rate of the temperature regulating medium, then waits for a certain period of time to elapse, and makes transition to the measurable state.

7. The automatic analyzer according to claim 1, wherein
the operation control unit raises the current or the voltage applied to the light source in the measurement preparation state, raises the flow rate of the temperature regulating medium for a certain period of time, and restores the flow rate of the temperature regulating medium to a flow rate before raising when an amount of change in light intensity of the light source per unit time is within a threshold value of the amount of change in light intensity.

8. The automatic analyzer according to claim 1, further comprising:
a spectrophotometer, wherein
the operation control unit raises the current or the voltage applied to the light source in the measurement preparation state, raises the flow rate of the temperature regulating medium for a certain period of time, and restores the flow rate of the temperature regulating medium to a flow rate before raising when an amount of change in light absorbance per unit time detected by a spectrophotometer is within a set threshold value of the amount of change in light absorbance.

9. The automatic analyzer according to claim 1, further comprising:
a temperature sensor that measures the temperature of the light source, wherein
the operation control unit raises the current or the voltage applied to the light source in the measurement preparation state, raises the flow rate of the temperature regulating medium for a certain period of time, and restores the flow rate of the temperature regulating medium to a flow rate before raising when the temperature of the light source reaches a temperature threshold value.

10. The automatic analyzer according to claim 1, wherein
the light source is a light emitting diode.

11. A light source stabilization method for an automatic analyzer including a light source that irradiates a reaction container containing a mixed liquid of a sample and a reagent with light for measuring the sample, a temperature regulating mechanism that regulates a temperature of the light source using a temperature regulating medium, a reaction tank in which a temperature of the reaction container is regulated using the temperature regulating medium, an analyzing unit that analyzes the sample, and an operation control unit, the method comprising:
when transitioning from a non-measurement state of the sample to a measurable state via a measurement preparation state,
raising a current or a voltage applied to the light source in the measurement preparation state, raising a flow rate of the temperature regulating medium for a certain period of time, restoring the flow rate of the temperature regulating medium to a flow rate before raising, then making transition to a measurable state, and executing measurement of the sample.

12. The light source stabilization method for an automatic analyzer according to claim 11, wherein
the flow rate of the temperature regulating medium is raised for a certain period of time, the flow rate of the temperature regulating medium is restored, then a certain period of time is elapsed, and transition to the measurable state is made.

13. The light source stabilization method for an automatic analyzer according to claim 11, wherein
the current or the voltage applied to the light source is raised in the measurement preparation state, the flow rate of the temperature regulating medium is raised for a certain period of time, and the flow rate of the temperature regulating medium is restored to a flow rate before raising when an amount of change in light intensity of the light source per unit time is within a threshold value of the amount of change in light intensity.

14. The light source stabilization method for an automatic analyzer according to claim 11, wherein
the current or the voltage applied to the light source is raised in the measurement preparation state, the flow rate of the temperature regulating medium is raised for a certain period of time, and the flow rate of the temperature regulating medium is restored to a flow rate before raising when an amount of change in light absorbance of the sample per unit time is within a set threshold value of the amount of change in light absorbance.

15. The light source stabilization method for an automatic analyzer according to claim 11, wherein
the current or the voltage applied to the light source is raised in the measurement preparation state, the flow rate of the temperature regulating medium is raised for a certain period of time, and the flow rate of the temperature regulating medium is restored to a flow rate before raising when the temperature of the light source reaches a temperature threshold value.
